Europäisches Patentamt

European Patent Office

Office européen des brevets

(19)

(11) Veröffentlichungsnummer: **0 089 400**
**A1**

(12) **EUROPÄISCHE PATENTANMELDUNG**

(21) Anmeldenummer: **82103204.2**

(22) Anmeldetag: **16.04.82**

(51) Int. Cl.³: **B 03 C 3/88**
**B 65 G 53/12**

(30) Priorität: **18.03.82 EP 82102191**

(43) Veröffentlichungstag der Anmeldung:
**28.09.83 Patentblatt 83/39**

(84) Benannte Vertragsstaaten:
**AT DE FR GB IT SE**

(71) Anmelder: **Freier Grunder Eisen- und Metallwerke GmbH**
**Fritz-Schäfer-Strasse 26 Postfach 1220**
**D-5908 Neunkirchen(DE)**

(72) Erfinder: **Rötters, Horst, Ing. grad.**
**Vorm neuen Wäldchen 20**
**D-5905 Freudenberg(DE)**

(74) Vertreter: **Blumbach Weser Bergen Kramer Zwirner Hoffmann Patentanwälte**
**Radeckestrasse 43**
**D-8000 München 60(DE)**

(54) Entsorgungseinrichtung für Flugasche-Elektrofilter sowie Verfahren zu ihrem Betrieb.

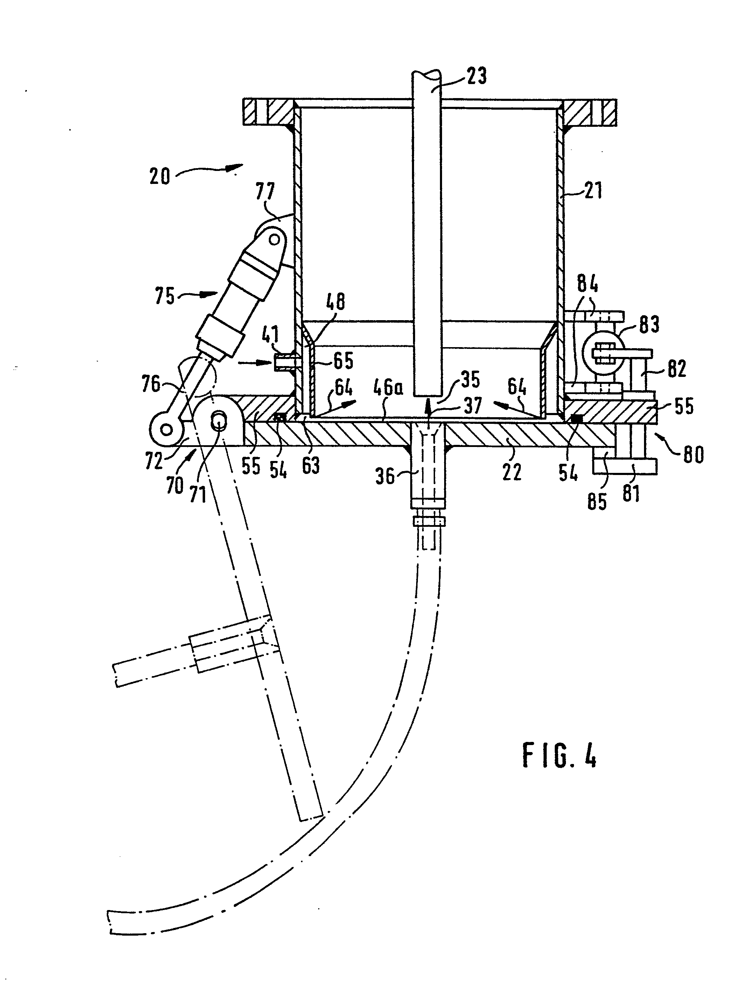

(57) Entsorgungseinrichtung für Flugasche-Elektrofilter mit in Spalten und Reihen angeordneten Filterzellen, die je in einen Schubsender (20) einmünden. Der Schubsender (20) weist einen leicht entfernbaren oder abklappbaren Bodendeckel (22) auf, um das rohrförmige Schubsendergefäß (21) leicht warten zu können und gegebenenfalls Störungen automatisch zu beseitigen. Am Bodendeckel (22) ist eine zentrale Förderdüse (36) angebracht, die einen Strahlstrom (37) erzeugt, der von einer konzentrischen Flachströmung (64) umgeben wird, die mit einer Ringdüse (63) oder einem Düsenkranz erzeugt wird. Die Reihen der Filterzellen münden in je eine Transportleitung, und die Transportleitungen in eine Sammelleitung. Die Schubsender werden spaltenweise und nacheinander zyklisch angesteuert (Fig. 4).

FIG. 4

Croydon Printing Company Ltd

EP 0 089 400 A1

## Entsorgungseinrichtung für Flugasche-Elektrofilter sowie Verfahren zu ihrem Betrieb

Die Erfindung bezieht sich auf eine Entsorgungseinrichtung für Flugasche-Elektrofilter mit folgenden Merkmalen: in Spalten und Reihen angeordnete Filterzellen weisen jeweils eine trichterförmige Rutsche auf; jeweils ein pneumatischer Schubsender ist über eine Einlaßverschlußeinrichtung mit einer der Rutschen verbunden und weist ein mit Auslaßventil ein- und ausschaltbares Förderrohr sowie, fluchtend zu diesem und durch einen Sendespalt getrennt, eine Förderdüse auf. Die Erfindung bezieht sich auch auf Verfahren zum Betrieb der Entsorgungseinrichtung.

Bei einer Entsorgungseinrichtung dieser Art (Prospekt 5090A Reg. 7350180.1 der Fläkt GmbH) sind pneumatische Schubsender mit trichterförmigem Gefäß vorgesehen, in welchem eine Fluidisierung der Flugasche vorgenommen wird, bevor die Entleerung des Gefässes über jeweils eine Transportleitung in ein Zwischensilo stattfindet, von dem aus ein sogenannter Jumbotransmitter die Feststoffpartikel in ein Hauptsilo mit Entlüftungsfilter pneumatisch weiterfördert. Eine solche Entsorgungseinrichtung ist relativ teuer in der Herstellung und schlecht zu warten.

Der Erfindung liegt die Aufgabe zugrunde, eine Entsorgungseinrichtung zu schaffen, die im Aufbau einfach ist (niedrige Herstellungskosten), sich einfach warten läßt und bei auftretenden Störfällen eine automatische angepaßte Reaktion auszulösen ermöglicht.

Die gestellte Aufgabe wird aufgrund der Maßnahmen des Hauptanspruchs gelöst. Die Unteransprüche beziehen sich auf Ausgestaltungen und Weiterbildungen der Erfindung.

Bei der Erfindung ist jede Filterzelle als Rutsche ausgebildet, an derem tiefsten Punkt sich ein Rohr anschließt, welches durch einen Bodendeckel geschlossen ist, an dem sich Düsen zur Erzeugung des Strahlstromes und einer konzentrischen Flachströmung befinden, um die Flugasche pneumatisch über ein Förderrohr wegzufördern. Mehrere Förderrohre vereinigen sich zu je einer gemeinsamen Transportleitung, und mehrere Transportleitungen zu je einer Sammelleitung. Die Schubsender werden zyklisch betrieben, und zwar mehrere gleichzeitig, jedoch so, daß jede Transportleitung gleichmäßig beaufschlagt wird. Wegen der rohrförmigen Ausbildung des Sendegefässes und der leichten Entfernbarkeit des Bodendeckels ist die Wartung erleichtert. Sind häufiger Störungen zu erwarten, kann der Bodendeckel abgeklappt werden. Durch Einschalten nur des Strahlstromes auf Kosten der Flachströmung kann das Förderrohr "durchgepustet" werden.

Ein Ausführungsbeispiel der Erfindung wird anhand der Zeichnung beschrieben. Dabei zeigt:

Fig. 1 eine Anordnung von Filterzellen,
Fig. 2 einen Schubsender, von der Seite gesehen,
Fig. 3 eine Einzelheit aus Fig. 2 und
Fig. 4 eine Variante des Schubsenders.

In drei Reihen 1, 2, 3 und vier Spalten a, b, c, d sind Filterzellen 4 angeordnet und über Transportleitungen 5, 6 und 7 miteinanderverbunden. Die Transportleitungen 5, 6, 7 vereinigen sich zu einer Sammelleitung 8. Eine weitere Sammelleitung 9 kommt von einer nicht dargestellten gleichartigen Filterzellenanordnung und führt zusammen mit der Sammelleitung 8 zu einem Hauptsilo mit Entlüftungsfilter. Der Filterzellenanordnung werden Rauchgase über Rohrleitungssystem 10, 11 zu- und abgeführt. In jeder Filterzelle 4 sitzt ein nicht dargestelltes Elektrofilter, welches die Flugasche abscheidet, die sich in jeweils einer trichterförmigen Rutsche 15 sammelt.

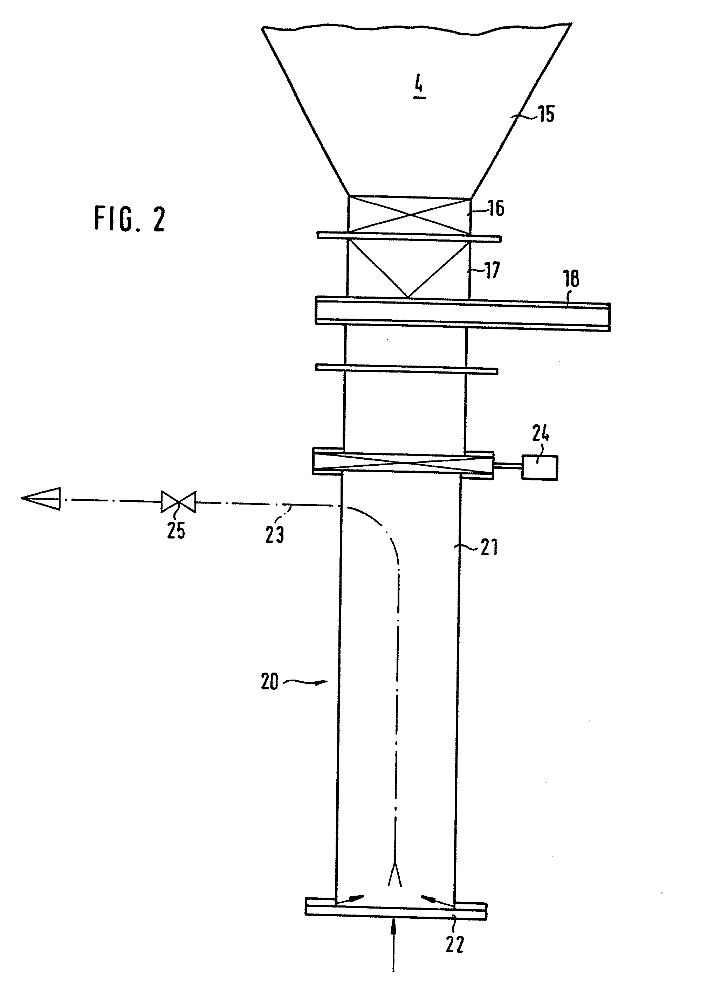

Fig. 2 zeigt eine solche trichterförmige Rutsche 15 unmittelbar unter jeder Filterzelle 4. Die Rutsche 15 weist eine Auslaßöffnung 16 auf, die als Übergangsstück zu einem Rohrstutzen 17 ausgebildet ist, in welchem ein Notabsperrschieber 18 untergebracht ist. Ein Schubsender 20 schließt sich in Verlängerung des Rohrstutzens 17 nach unten an und besteht im wesentlichen aus einem Rohrgefäß 21, einem ebenen Boden 22, einem Förderrohr 23 und einer Drehklappe 24. Der Notabsperrschieber 18 und die Drehklappe 24 sind in einer Ebene quer zur Rohrachse bewegbar. Die Auslaßöffnung 16, der Rohrstutzen 17 und das Rohrgefäß 21 weisen im wesentlichen zueinanderfluchtende Rohrwände auf. Im oberen Bereich des Rohrgefässes 21 kann ein Füllstandgeber vorgesehen sein, dergleichen im unteren Bereich. Das Rohrgefäß 21 ist mit einer Länge von etwa 1m und einem Durchmesser von 300 mm verhältnismäßig klein, verglichen mit üblichen Schubsendern, das Förderrohr 23 bei 10 bis 100 mm relativ dünn.

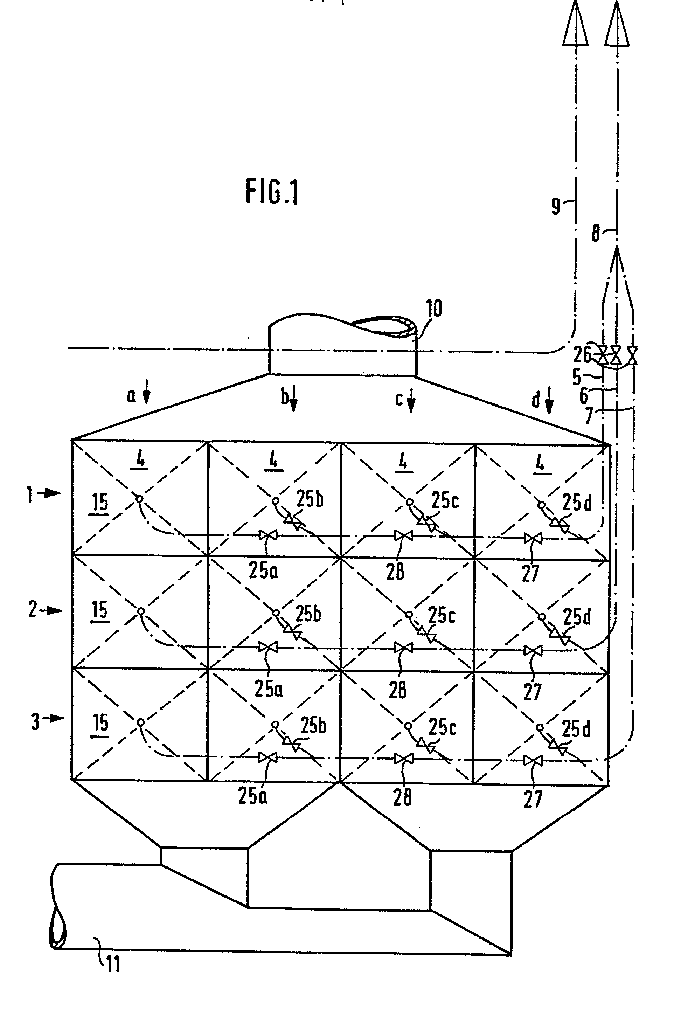

In jedem Förderrohr 23 ist ein elektrisch betätigbares Auslaßventil 25 a bis d (Fig. 1) vorgesehen. Im Zuge der Transportleitung 5, 6, 7 nach jeder Einmündung eines Förderrohres 23 sind ferner Schalt- oder Rückschlagventile 26, 27, 28 vorgesehen. Es werden jeweils nur die Auslaßventile 25a oder 25b oder 25c oder 25d zyklisch angesteuert, so daß abwechselnd die Spalte a, b, c oder d geleert werden kann.

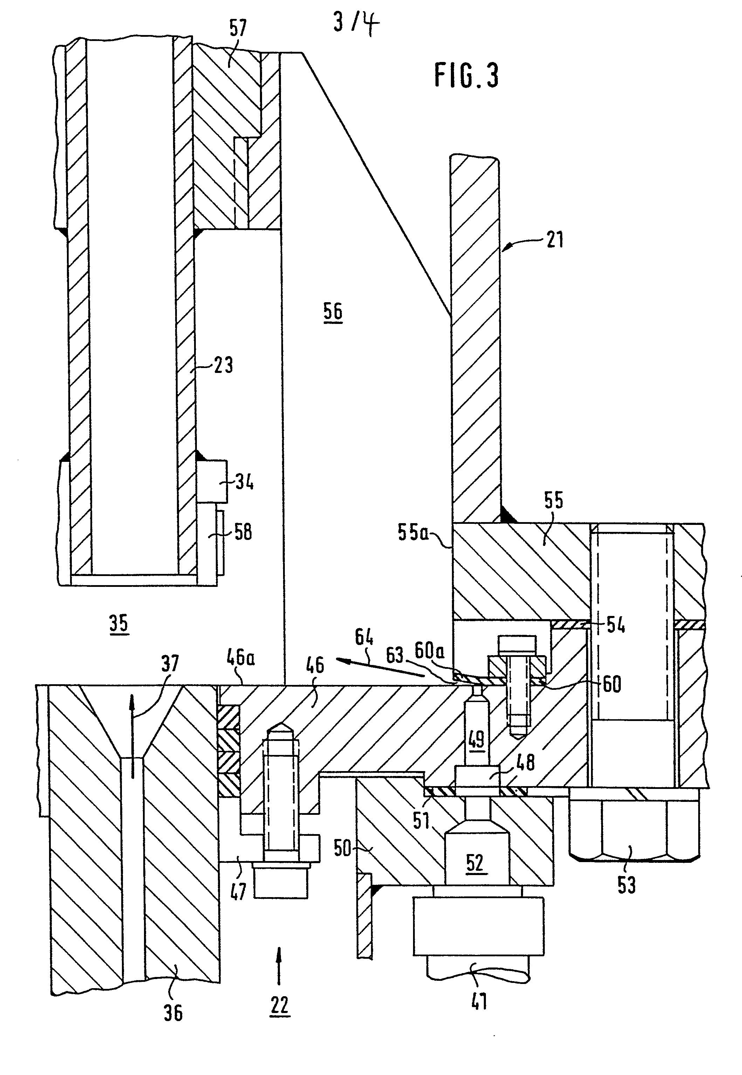

Fig. 3 zeigt den Bodendeckel 22 des Rohrgefässes 21. Der Bodendeckel 22 besteht im wesentlichen aus einer Bodenplatte 46 und einem Flanschdeckel 50. Die Bodenplatte 46 weist eine Stufenbohrung zur Aufnahme einer Förderdüse 36 und einer angeschraubten Dichtung 47 auf. Die Bodenplatte 46 und die Mündung der Förderdüse 36 fluchten zueinander und bilden eine Führungsfläche 46a. An ihrer

Unterseite weist die Bodenplatte 46 ferner einen Ringkanal 48 auf, von dem ein Kranz von Düsen 49 ausgeht,
welche die Förderdüse 36 im gleichen Abstand umgeben.
Der Ringkanal 48 wird durch den Flanschdeckel 50 abgedeckt und durch Flachdichtungen 51 nach außen abgedichtet. Im Flanschdeckel 50 ist eine Schraubbohrung 52 vorgesehen, an der eine Austragssteuerleitung 41 dichtend
befestigt ist und den Ringkanal 48 speist. Die Bodenplatte 46 ist mittels Schrauben 53 unter Zwischenlage
von Flachdichtungen an einem Flansch 55 des Rohrgefässes
21 befestigt und kann nach Lösen der Schrauben 53 herausgenommen und ausgetauscht werden. Das Rohrgefäß 21 weist
eine zylindrische Innenfläche 21a auf, an der sich sternförmig angeordnete Leitbleche 56 abstützen, die über
einen Ring 57 zusammengehalten werden und insgesamt wie
die Stabilisierungsflossen eines Geschosses aussehen.
Der Ring 57 dient außerdem zur Befestigung an dem Förderrohr 23, dessen Ende 34 auf diese Weise abgestützt wird.
Am vorderen Ende des Förderrohres 23 können ferner Dichtungsteile 58 angebracht sein. Der Kranz der Düsen 49
wird durch einen elastischen Ring 60 abgedeckt, der durch
einen Metallring 61 und Schrauben 62 an der Bodenplatte
46 befestigt ist. Im Bereich des Düsenkranzes 49 bildet
der elastische Ring 60 eine Lippe 60a, die infolge des
Druckgases, welches über die Austragssteuerleitung 41
zugeführt wird, zurückweicht und einen Ringspalt 63 freigibt, der die zugehörige Förderdüse 36 umgibt und eine
Flachströmung 64 erzeugt, die konzentrisch auf den Sendespalt 35 gerichtet ist, der sich zwischen der Förderdüse
36 und dem Förderrohr 23 befindet. Die konzentrische
Flachströmung 64 wird dabei von der Führungsfläche 46a
der Bodenplatte 46 geführt und nimmt schließlich die Höhe des Sendespaltes 35 an.

Der Betrieb der Entsorgungseinrichtung geht wie folgt
vor sich:
Infolge der Rauchgase, die durch die Elektrofilter strömen, sammelt sich in den Filterzellen 4 Flugasche an, die über die trichterförmigen Rutschen 15, die Auslaßöffnung 16, den Rohrstutzen 17, die geöffnete Drehklappe 24 in das jeweilige Rohrgefäß 21 gelangt. Wenn der Füllstandgeber anspricht - oder in gewissen Taktzeiten - werden die Auslaßventile 25a oder 25b oder 25c oder 25d geöffnet, so daß jeweils eine Spalte,a, b, c oder d der Filterzellen 4 bzw. die angeschlossenen Schubsender 20 geleert werden. Es werden beispielsweise die Schubsender der linken Spalte a in Fig. 1 wirksam gemacht. Dabei werden die Ventile 26, 27, 28 geöffnet, während die Auslaßventile 25b, c, d geschlossen bleiben. Zu einer späteren Zeit wird die Spalte b bedient, dann die Spalte c u.s.f., wobei durch zyklisches Aktivieren die Transportleitungen 5, 6, 7 gleichzeitig betrieben werden und den richtigen Füllungsgrad für die Sammelleitung 8 ergeben.

Der Betrieb eines einzelnen Schubsenders 20 ist wie folgt:
Die Drehklappe 24 wird geschlossen. Die Förderdüse 36 und die Austragssteuerleitung 42 werden mit Druckluft beaufschlagt, wodurch ein Strahlstrom 37 in das Förderrohr 23 hinein entsteht und die Flachströmung 64 Material in diesen Strahlstrom 37 einträgt. Die angesammelte Asche wird deshalb über das Förderrohr 23 weggefördert. Gesteuert durch einen nicht dargestellten Füllstandgeber für minimalen Füllstand oder durch ein Zeitrelais wird die Druckluft zu der Förderdüse 36 und der Austragssteuerleitung 41 abgeschaltet.

Die rasch aufeinanderfolgende Leerung der verhältnismässig kleinen Rohrgefässe 21 und deren örtliche Nähe zu den heizenden Rauchgasen haben zur Folge, daß die Flugasche wenig zur Krustenbildung neigt. Im gleichen Sinne ist die glatt durchgehende Wand des Rohrgefässes 21 wirksam. Darüber hinaus können Störfälle wegen der guten Zugänglichkeit des Gefäßinneren nach Entfernung des Bodendeckels leicht behoben werden.

Die Ausführungsform des Schubsenders 20 nach Fig. 4 ist zur automatischen Beseitigung von auftretenden Störfällen ausgebildet. Der Bodendeckel 22 ist abklappbar ausgebildet und weist hierzu ein Scharnier 70, einen Betätigungszylinder 75 und eine Verriegelungseinrichtung 80 auf. Durch das Scharnier 70 ist der Bodendeckel 22 an dem Flansch 55 des Rohrgefässes 21 um die Drehachse 71 schwenkbar befestigt. Jenseits der Achse 71 weist der Bodendeckel 22 einen Fortsatz 72 auf, an welchem die Kolbenstange 76 des Betätigungszylinders 75 angelenkt ist. Das andere Ende des Betätigungszylinders 75 ist an einem Auge 77 der Rohrwandung 21 angelenkt. Durch entsprechende Beaufschlagung des Zylinders 75 kann der Bodendeckel 22 wie dargestellt abgeklappt oder angehoben werden. Die Geschlossen-Stellung wird durch die Verriegelungseinrichtung 80 gesichert. Diese enthält einen Verriegelungshebel 81, der an einer Schwenkwelle 82 sitzt, die durch eine Betätigungseinrichtung 83 gedreht werden kann. Diese ist über Tragarme 84 mit der Rohrwandung 21 verbunden. Ein Nocken 85 an dem Verriegelungshebel 81 sorgt für gute Anlage des Bodendeckels 22 an der Ringdichtung 54.

Es ist auch möglich, die Verriegelungseinrichtung 80 mit schnell lösbaren Schraubverbindungen zu realisieren.

Bei Stillstandzeiten der Elektrofilter und Wiederanfahren der Anlage kann es zur Bildung von Knollen und Schülpen in der trichterförmigen Rutsche 15 kommen. Größere Knollen können nicht pneumatisch gefördert werden. Durch Wegklappen des Bodendeckels 22 ist eine einfache Reinigungsmöglichkeit geschaffen. Wenn die Anlage in dem Betriebszustand mit Neigung zur Knollenbildung fährt, kann man von Zeit zu Zeit den Bodendeckel 22 automatisch abklappen und die angesammelten Knollen entfernen.

In jedem Förderrohr 23 oder in den Transportleitungen 5, 6, 7 sind jeweils Druckschalter vorgesehen, die das Auftreten einer Verstopfung überwachen. Bei einer Verstopfung tritt nämlich ein erhöhter Druck in dem Förderrohr 23 bzw. den Transportleitungen 5, 6, 7 auf. Für diesen Fall ist vorgesehen, die der Austragssteuerleitung 41 zugeführte Druckluft abzusperren und zusätzlich der Förderdüse 36 zuzuführen. Auf diese Weise ist es möglich, das verstopfte Rohr gewissermaßen durchzupusten. Die Gutbeladung des pneumatischen Stromes bleibt nämlich gering, wenn nur über die Förderdüse 36 Druckluft zugeführt wird.

Da, wie erläutert, die Gutbeladung durch Erhöhung der über 41 zugeführten Austragsdruckluft gegenüber der Düsenförderluft bei 36 erhöht wird, ist es möglich, durch geeignete Einstellung der bei 36 und 41 zugeführten Druckluft bzw. ihres gegenseitigen Verhältnisses die Gutbeladung auf einen günstigen Wert einzustellen. Der jeweils günstigste Wert hängt von der jeweiligen Rohrleitungslänge der Transportleitungen 5, 6, 7 und der Sammelleitung 8 ab. Im Falle, daß die Druckluft an Ort und Stelle erzeugt wird, kann man mit einer bestimmten konstanten Druckluftmenge pro Zeiteinheit rechnen, die in die Förderluft (bei 36) und in die Austragsluft (bei 41) aufgeteilt wird. Durch entsprechende Wahl dieses Aufteilungsverhältnisses kann die einmal ausgelegte Drucklufterzeugungseinrichtung für unterschiedliche Entsorgungseinrichtungen verwendet werden.

Wie in Fig. 4 dargestellt, kann der Ringspalt 63 auch unmittelbar von einer Ringkammer 48 gespeist werden, die zwischen der Gefäßwandung 21 und einem Ringeinsatz 65 angeordnet ist.

---

Patentansprüche:

1.    Entsorgungseinrichtung für Flugasche-Elektrofilter
mit folgenden Merkmalen:

1.    in Spalten (a, b, c, d) und Reihen (1, 2, 3) angeordnete Filterzellen (4) weisen jeweils

1.1   eine trichterförmige Rutsche (15) auf;

2.    jeweils ein pneumatischer Schubsender (20) ist

2.1   über eine Einlaßverschlußeinrichtung (16, 17, 18,
24) mit einer der Rutschen (15) verbunden

2.2   und weist ein mit Auslaßventil (25a, b, c, d) ein-
und ausschaltbares Förderrohr (23) sowie, fluchtend
zu diesem und durch einen Sendespalt (35) getrennt,

2.3   eine Förderdüse (36) zur Erzeugung eines Strahlstromes (37) auf;

gekennzeichnet durch:

2.4   ein Ringspalt (63) oder Düsenkranz ist zur Erzeugung einer zum Strahlstrom konzentrischen Flachströmung (64) ausgebildet, die durch

2.5   einen Bodendeckel (22) geführt wird, der leicht demontierbar oder abklappbar an

2.6   einem Rohrgefäß (21) befestigt ist, welches ohne
wesentliche Querschnittsänderung bis zur Einlaß-
Verschlußeinrichtung (16, 17, 18, 24) reicht;

3.    die Förderrohre (23) der entlang jeweils einer Filterzellenreihe (1, 2, 3) angeordneten Schubsender
(20) sind an einer gemeinsamen Transportleitung
(5 oder 6 oder 7) angeschlossen,

3.1   wobei es soviele Transportleitungen (5, 6, 7) wie
Filterzellenreihen (1, 2, 3) gibt und

3.2   die Transportleitungen (5, 6, 7) in eine Sammelleitung (8) einmünden.


2.    Entsorgungseinrichtung nach Anspruch 1,
dadurch gekennzeichnet, daß die Transportleitung (5, 6,
7) nach jeder Einmündung eines Förderrohres (23) jeweils
ein Ventil (26, 27, 28) aufweist.

3.　Entsorgungseinrichtung nach Anspruch 1 oder 2, dadurch gekennzeichnet, daß die Einlaß-Verschlußeinrichtung (16, 17, 18, 24) und der Schubsender (20) zueinanderfluchtende Rohrwandungen aufweisen.

4.　Entsorgungseinrichtung nach einem der Ansprüche 1 bis 3, dadurch gekennzeichnet, daß die Einlaß-Verschlußeinrichtungen einen Notabsperrschieber (18) und eine Drehklappe (24) enthält, die in einer Ebene quer zur Rohrgefäßachse bewegbar sind.

5.　Entsorgungseinrichtung nach einem der Ansprüche 1 bis 4, dadurch gekennzeichnet, daß das Rohrgefäß (21) mit etwa 1 m Länge und einem Durchmesser von etwa 300 mm verhältnismäßig klein und das Förderrohr (23) mit einer lichten Weite von etwa 10 bis 100 mm verhältnismäßig dünn ist.

6.　Entsorgungseinrichtung nach einem der Ansprüche 1 bis 5, dadurch gekennzeichnet, daß eine Einrichtung zur Erzeugung einer in etwa zeitlich konstanten Druckgasmenge vorgesehen ist und daß das Aufteilungsverhältnis dieser Druckgasmenge auf den Strahlstrom (37) und die Flachströmung (64) in Anpassung an die jeweilige Rohrleitungslänge (5, 6, 7, 8, 23) eingestellt ist.

7.　Entsorgungseinrichtung nach einem der Ansprüche 1 bis 6, dadurch gekennzeichnet, daß der Bodendeckel (22) einerseits mit einem Scharnier (70) und andererseits mit einer Verriegelungseinrichtung (80) an dem Rohrgefäß (21) gehalten wird.

8.　Entsorgungseinrichtung nach Anspruch 7, gekennzeichnet durch je einen motorischen Antrieb (75, 83) des Bodendeckels (22) und der Verriegelungseinrichtung (80).

9. Verfahren zum Betrieb der Entsorgungseinrichtung nach einem der Ansprüche 1 bis 8, dadurch gekennzeichnet, daß die Auslaßventile (25a, 25b, 25c, 25d) jeweils einer Spalte (a, b, c, d) der Schubsender (20) gleichzeitig geöffnet werden, um jede Transportleitung (5, 6, 7) mit der Flugasche jeweils eines Schubsenders (20) zu beaufschlagen.

10. Verfahren nach Anspruch 9, dadurch gekennzeichnet, daß jedes Förderrohr (23) bzw. jede Transportleitung (5, 6, 7) mit einer Beladung in der Größenordnung von 10 bis 80 kg Flugasche/kg Luft betrieben wird.

11. Verfahren zum Betrieb der Entsorgungseinrichtung nach einem der Ansprüche 1 bis 8, dadurch gekennzeichnet, daß bei Druckanstieg im Förderrohr (23) über einen bestimmten Wert das die Flachströmung (64) erzeugende Austragsgas (bei 41) abgeschaltet wird, während das den Strahlstrom (37) erzeugende Fördergas (bei 36) eingeschaltet bleibt.

---

FIG.1

FIG. 2

FIG.3

FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | FR-A- 953 301 (FULLER COMP.)  --- | | B 03 C 3/88<br>B 65 G 53/12 |
| A | DE-C- 913 258 (METALLGESELLSCHAFT A.G.)  ----- | | |

RECHERCHIERTE
SACHGEBIETE (Int. Cl. 3)

B 03 C
B 65 G

Der vorliegende Recherchenbericht wurde für alle Patentansprüche erstellt.

| Recherchenort<br>DEN HAAG | Abschlußdatum der Recherche<br>15-06-1983 | Prüfer<br>DECANNIERE L.J. |
|---|---|---|